# EUROPÄISCHE PATENTSCHRIFT

(11) **EP 1 475 322 B1**
(45) Veröffentlichungstag und Bekanntmachung des Hinweises auf die Patenterteilung: **21.06.2006**
(21) Anmeldenummer: 04090153.0
(22) Anmeldetag: 16.04.2004
(51) Int. Cl.: B65G 17/00, B65G 47/94, B65G 35/06, B64F 1/36

(54) **Fördersystem, insbesondere eine Flughafen-Gepäckförderanlage**
Conveyor system, particularly a baggage conveyor installation for airports
Système de transport, notamment pour installation de convoyage des bagages dans des aéroports

(30) Priorität: 09.05.2003 DE 10320963
(43) Veröffentlichungstag der Anmeldung: 10.11.2004
(73) Patentinhaber: SIEMENS AKTIENGESELLSCHAFT, 80333 München (DE)
(72) Erfinder: Brixius, Wolfgang, 91077 Neunkirchen A. Br (DE); Gräfer, Dominik, 44265 Dortmund-Wellinghofen (DE); Hoene, Albrecht, Dr., 93138 Lappersdorf (DE)

(56) Entgegenhaltungen:
- EP-A- 0 899 221
- US-A- 4 089 404

## Beschreibung

Die Erfindung betrifft ein Fördersystem für Behälter zum Transportieren von Gütern, insbesondere von Gepäckstücken, insbesondere für eine Flughafen-Gepäckförderanlage, mit einer Entladeeinrichtung gemäß den Oberbegriffen des Anspruchs 1.

Aus der EP 0 806 384 A2 ist bereits eine Entladeeinrichtung eines Fördersystems bekannt. Diese ist als Flughafen-Gepäckförderanlage einsetzbar, bei der Behälter zum Transportieren von Gütern dienen, insbesondere von Gepäckstücken wie beispielsweise Koffern. Die Entladeeinrichtung umfasst Mittel, welche den Transportbehälter auf einer Seite ankippen, so dass die Gepäckstücke aufgrund der wirkenden Hangabtriebskraft vom Transportbehälter rutschen. Dies erfolgt in einem Entladebereich, der zur Übernahme der Gepäckstücke mit einer Rutsche versehen ist. Das Ankippen erfolgt dadurch, dass eine der beiden parallelen Laufschienen der Förderstrecke, auf denen sich der Behälter fortbewegt, aus der Transportebene heraus soweit nach oben verläuft, bis der vorgegebene Kippwinkel erreicht ist. Die Winkellage des Behälters wird so lange eingenommen, bis die Gepäckstücke vom Behälter rutschen. Eine solche Entlabeeinrichtung eines Fördersystems ist aus der EP 0 899 221 A1 auch bekannt.

Der Nachteil dieses Fördersystems mit Entladeeinrichtung besteht darin, dass der Entladevorgang bei jedem Durchlauf eines Behälters erfolgt, also nicht zuschaltbar ist.

Eine andere bekannte Entladeeinrichtung arbeitet so, dass der zu entladene Behälter im Bereich der Entladeeinrichtung von Greifelementen gegriffen und an einer vorgegebenen Stelle um eine parallel zur Förderrichtung angeordneten Achse geschwenkt wird, bis sich der Behälter in der gewünschten Schräglage befindet. Nach dem Entleeren der Behälter werden die Greifelemente wieder in die Ausgangslage zurückgeschwenkt und in die Ausgangsposition zurückbewegt. Das Kippen des Behälters erfolgt nur bei gewünschter Entladung.

Bei einer weiteren Entladeeinrichtung, bei der auf Wunsch eine Entleerung der Behälter stattfindet, fährt der zu entladene Behälter auf die Entladeeinrichtung, wird dort auf die Geschwindigkeit Null abgebremst und um eine feste Drehachse gekippt. Der Behälter bleibt so lange an derselben Stelle bis der Behälter entleert ist. Nach der Entleerung wird der Behälter wieder in die Ursprungslage zurückgekippt und aus der Entladeeinrichtung heraustransportiert.

Der Nachteil der bekannten Entladeeinrichtungen besteht darin, dass die Entladung der Behälter nicht bei einem hohen Durchsatz erfolgt.

Die Aufgabe der Erfindung besteht darin, ein Fördersystem mit einer Entladeeinrichtung vorzuschlagen, bei der die Entladung ein- und ausschaltbar ist, und zwar bei einer relativ hohen Durchlaufgeschwindigkeit der Behälter.

Die Lösung dieser Aufgabe ist bezogen auf das Fördersystem durch die im Anspruch 1 angegebenen Merkmale gegeben. Durch die kennzeichnenden Merkmale der Unteransprüche ist das Fördersystem in vorteilhafter Weise weiter ausgestaltet.

Die Lösung sieht bezogen auf das Fördersystem vor, dass die in der Kurve zu entladenden Behälter den Entladebereich mit einer zweiten Fördergeschwindigkeit durchlaufen, wobei die zweite Fördergeschwindigkeit höher als die erste ist, und die derart gewählt ist, dass die Güter aufgrund der Fliehkraft so stark nach außen beschleunigt werden, dass sie im Entladebereich selbsttätig von den Behältern rutschen. Das Fördersystem muss also im Bereich der Entladeeinrichtungskurve lediglich über zwei hinreichend weit auseinanderliegende Geschwindigkeiten für den Behältertransport verfügen, um durch einfache Geschwindigkeitsumschaltung eine Entladung der Behälter zu bewirken. Dazu werden in der Regel keine zusätzlichen Teile und Antriebe benötigt, was mit relativ geringen Kosten verbunden ist. Darüber hinaus bedingt die Geschwindigkeitserhöhung bei den zu entladenen Behältern eine hohe Behälterdurchlaufgeschwindigkeit.

Die Führungs- und/oder Antriebsmittel können relativ einfach ausgebildet sein, wenn die Behälter mit ihrer Bodenunterseite auf Abstützelementen aufliegen.

Um eine relativ schnelle Geschwindigkeitsumschaltung zu ermöglichen, wird vorgeschlagen, dass die Behälter zwei auf der Behälterunterseite ausgebildete und in Transportrichtung verlaufende Führungs- und/oder Antriebsflächen aufweisen, die spiegelsymmetrisch in einem dem Radius der Kurve entsprechenden Radius derart nach außen oder nach innen gekrümmt sind, dass der größte bzw. kleinste Abstand der Führungs- und/oder Antriebsflächen im Bereich der Längsseitenmitte liegt, und dass die Führungs- und/oder Antriebsmittel zumindest abschnittsweise jeweils an beiden Führungs- und/oder Antriebsflächen kraftschlüssig anliegen und einen Vortrieb des Behälters bewirken. Die Behälter werden also mittels eines vorgespannten Kraftschlusses gehalten und geführt, was eine schnelle Geschwindigkeitsänderung ermöglicht.

Konstruktiv einfach ist es, wenn die Führungs- und/oder Antriebsflächen durch sich beidseitig der Behälterlängsmittelachse spiegelsymmetrisch erstreckende, einander zugewandte Seitenflächen einer in den Behälterboden eingeformten nutförmigen Vertiefung gebildet werden.

Eine gute Führung und Beschleunigung wird in der Kurve erzielt, wenn die Seitenflächen der nutförmigen Vertiefung spiegelsymmetrisch in einem dem Kurvenradius der Kurve entsprechendem Radius derartig nach außen gekrümmt sind, dass deren größter Abstand in der Behältermitte liegt.

Alternativ ist es möglich, dass die Seitenflächen der nutförmigen Vertiefung spiegelsymmetrisch in einem dem Kurvenradius entsprechendem Radius derartig nach innen gekrümmt sind, dass deren kleinster Abstand in der Behältermitte liegt.

Ein geräuscharmer Behältertransport wird erzielt, wenn der Abstand der Seitenflächen in den in Transportrichtung vorderen und hinteren Bereichen der nutförmigen Vertiefung der Breite der eingreifenden Führungs- und/oder Antriebsmittel angepasst ist, wobei die nutförmige Vertiefung beidseitig nach außen stufenlos trichterförmig erweitert ist.

Zweckmäßigerweise ist die Auflagefläche des Behälters zur Aufnahme des Stückgutes symmetrisch zur Behälterlängsachse muldenförmig nach unten gekrümmt.

Die Behälter werden sicherer entleert, wenn die Mulde quer zur Behälterlängsachse einen parabolischen Verlauf aufweist.

Den Behälter fest fassende und führende Führungs- und/oder Antriebsmittel werden erzielt, wenn diese aus in zwei Reihen angeordneten Rollen bestehen, deren Mantellinien jeweils einer Rollenreihe auf einer Kreisbahn liegen, die parallel zu mindestens einer der Seitenwände verläuft, wobei mindestens eine der Reihen von Rollen von einem Antriebsband umschlungen ist, welches an einer der Seitenwände anlegbar ist, während die andere Reihe der Rollen mindestens bereichsweise im Kontakt mit der gegenüberliegenden Seitenwand steht.

Alternativ ist es möglich, dass die Führungs- und/oder Antriebsmittel fliegend gelagerte und in die Nut eingreifende Kegel- oder Zylinderrollen sind, die in Förderrichtung hintereinander in mindestens einer Reihe angeordnet sind, wobei jede Rolle an mindestens einer der Seitenwände der nutförmigen Vertiefung anlegbar ist.

Geringe Verkantungen der Behälter in der Kurve sind sichergestellt, wenn die in die nutförmige Vertiefung eingreifenden Kegel- oder Zylinderrollen auf einem Kreisbahnabschnitt angeordnet sind, dessen Radienmittelpunkt auf einer gemeinsamen Achse liegt.

Die Führungs- und/oder Antriebseigenschaften der Behälter verbessern sich, wenn die Führungs- und/oder Antriebsmittel in einer Kurve des Förderers aus in zwei Reihen angeordneten Kegelrädern bestehen.

Die Erfindung wird nachfolgend anhand einer Zeichnung näher beschrieben. Es zeigen:
- Fig. 1: Einen Ausschnitt aus einem Fördersystem mit einer aus zwei Kurvenstücken gebildeten Kurve,
- Fig. 2: ein Kurvenstück gemäß Fig. 1 in einer vergrößerten Darstellung,
- Fig. 3: eine schematische Darstellung des Kurvenstücks gemäß Fig. 1 mit durchlaufendem Behälter,
- Fig. 4: eine alternative Ausführung des Kurvenstücks gemäß Fig. 2 und
- Fig. 5: die kinematische Umkehr des Kurvenstücks gemäß Fig. 4.

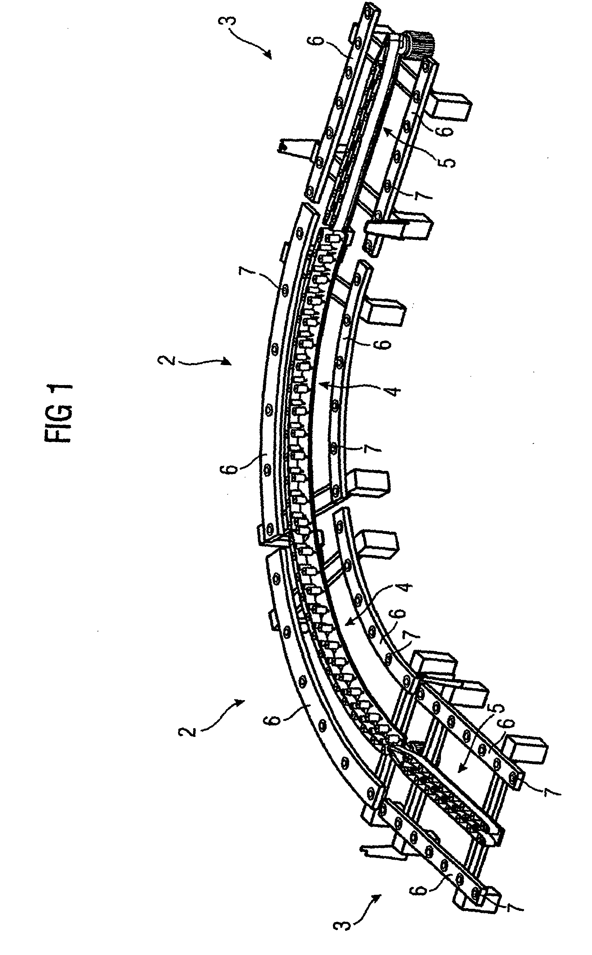

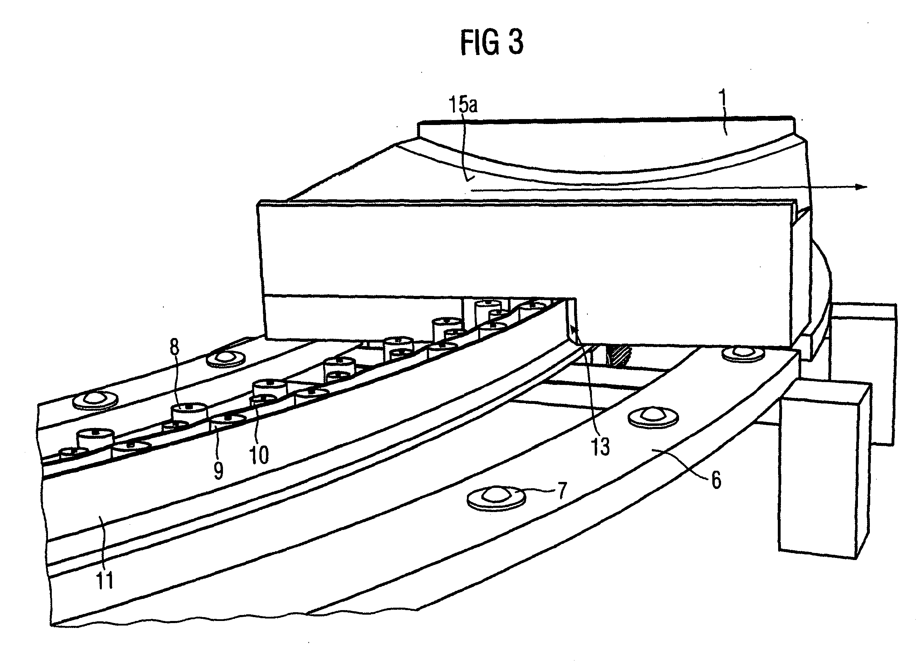

Fig. 1 zeigt einen Ausschnitt aus einem Fördersystem, beispielsweise eine Flughafen-Gepäckförderanlage, mit einer aus zwei Kurvenstücken 2 gebildeten Kurve für Behälter 1 (s. Fig. 3). Selbstverständlich könnte die Kurve auch einstückig ausgebildet sein. Der Ausschnitt zeigt zwei unmittelbar hintereinander angeordnete Kurvenstücke 2, denen je ein gerader Förderer 3 vor- und nachgeschaltet ist. Die beiden Kurvenstücke 2 und die geraden Förderer 3 verfügen jeweils im mittleren Bereich über Führungs- und/oder Antriebsmittel 4, 5. Auf beiden Seiten der Führungs- und/oder Antriebsmittel 4, 5 sind Tragplatten 6 als Tragelemente vorgesehen, wobei sich die Behälter 1 über Kugelrollen 7 als Abstützelemente auf den Tragplatten 6 abstützen, indem die Behälter 1 mit ihrer Unterseite auf den Kugelrollen 6 aufliegen.

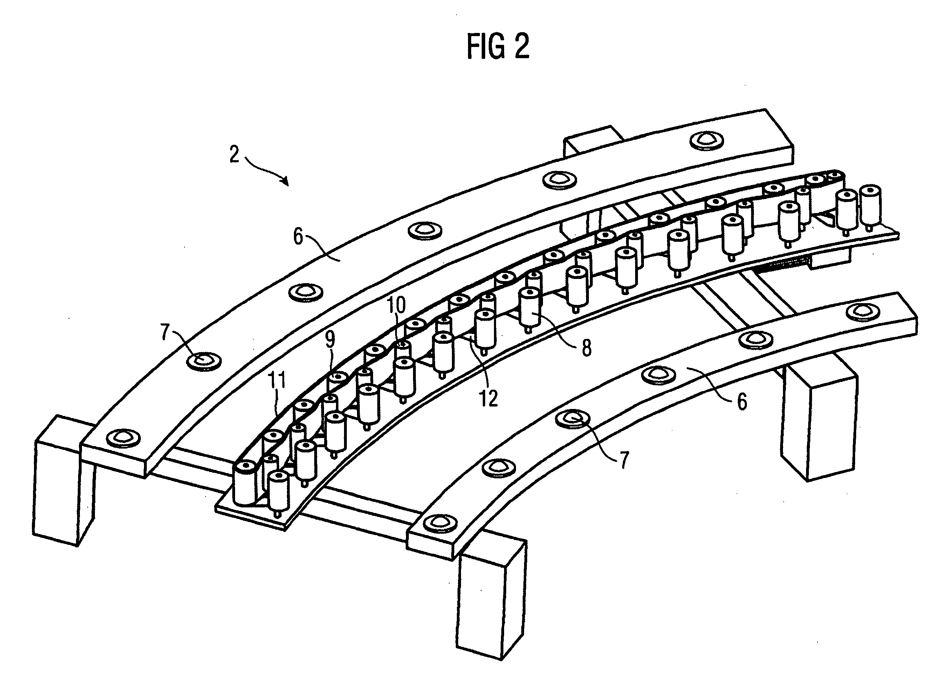

In Fig. 2 ist ein Kurvenstück 2 vergrößert dargestellt. Man erkennt, dass die Führungs- und/oder Antriebsmittel 4 Rollen 8, 9, 10 sowie ein Antriebsband 11 umfassen. Die Rollen 8, 9 verlaufen beidseitig einer gedachten Kurvenlinie, entlang derer sich die Behälter 1 bewegen. Die Rollen 8 sind dabei frei drehbar gelagert, während die Rollen 9 das endlos umlaufende Antriebsband 11 führen und antreiben. In Fig. 2 sind die außenliegenden Rollen 9 außerdem schwenkbar an jeweils einem Hebelarm 12 gelagert, dessen Schwenkachsen parallel zur Drehachse der zugehörigen außenliegenden Rolle 9 verlaufend zwischen diesen und den innenliegenden Rollen 8 angeordnet ist. Außerdem sind in Fig. 2 Hilfsrollen 10 vorgesehen, die hier direkt auf der gedachten Förderbahnlinie liegen, und zwar zwischen den außenliegenden und den innenliegenden Rollen 8, 9. Die Hilfsrollen 11 sind so angeordnet, dass das Antriebsband 11 im Lasttrum wellenförmig an den Hilfsrollen 10 entlang verläuft, so dass die außenliegenden Rollen 9 beim Antreiben des Antriebsbands 11 um die Schwenkachse verschwenken und dabei nach außen gedrückt werden, so dass sie den Behälter 1 zwischen den innenliegenden Rollen 8 und der nach außen weisenden Außenseite des Antriebsbands 11 unter Bildung eines Kraftschlusses verspannen.

Dargestellt ist in Fig. 3 ein Kurvenstück 2 in einer schematischen Darstellung mit einem zu transportierendem Behälter 1.

Die Behälter 1 weisen an ihrer Unterseite eine nutförmige Vertiefung 13 auf, deren als Führungs- und/oder Antriebsflächen ausgebildete Seitenflächen 14, 15 derart spiegelsymmetrisch nach außen gekrümmt sind, dass der größte Abstand der Seitenflächen 14, 15 etwa in Seitenflächenmitte liegt. Die Führungs- und/oder Antriebsmittel 4, 5 greifen in die Vertiefung 13 ein und liegen zumindest abschnittsweise jeweils an beiden Seitenflächen 14, 15 kraftschlüssig an. Sie bewirken so einen geführten Vortrieb der Behälter 1. Die Seitenflächen 14, 15 verlaufen korrespondierend zu den Rollen 8, 9 und dem Antriebsband 11 senkrecht zur Bodenunterseite des Behälters 1.

Fig. 3 zeigt weiter, dass die Auflagefläche 15a des Behälters 1 zur Aufnahme des Stückgutes symmetrisch zur Behälterlängsachse muldenförmig nach unten gekrümmt ist.

Insbesondere kann die Auflagefläche 15a quer zur Behälterlängsachse einen parabolischen Verlauf aufweisen.

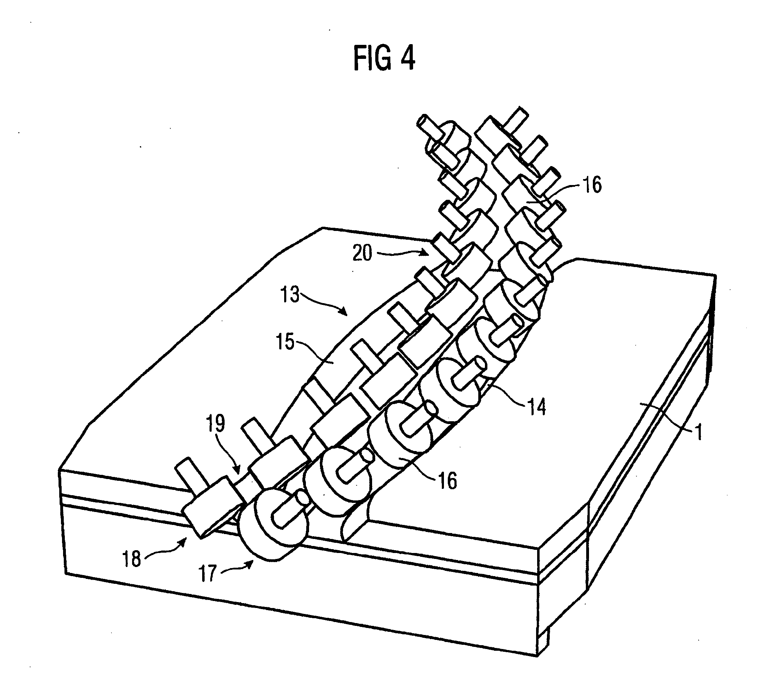

Fig. 4 entnimmt man eine alternative Ausführung des Kurvenförderers 2 für einen Behälter 1, dessen Seitenflächen 14, 15 schräg zueinander angeordnet sind. Und zwar so, dass sich eine nach außen öffnende nutförmige Vertiefung 13 ergibt. Anstelle der Rollen 8, 9 sind jetzt Kegelrollen 16 vorgesehen, die als zwei parallel verlaufende Rollenbahnen 17, 18 ausgebildet sind. Wie Fig. 4 zeigt liegen im Kurvenbereich beide Rollenbahnen 17, 18 an den Seitenflächen 14, 15 an, die Rollenbahn 17 nahezu vollständig an der Seitenfläche 14, die Rollenbahn 18 nur an den kurzen Seitenflächenabschnitten 19, 20.

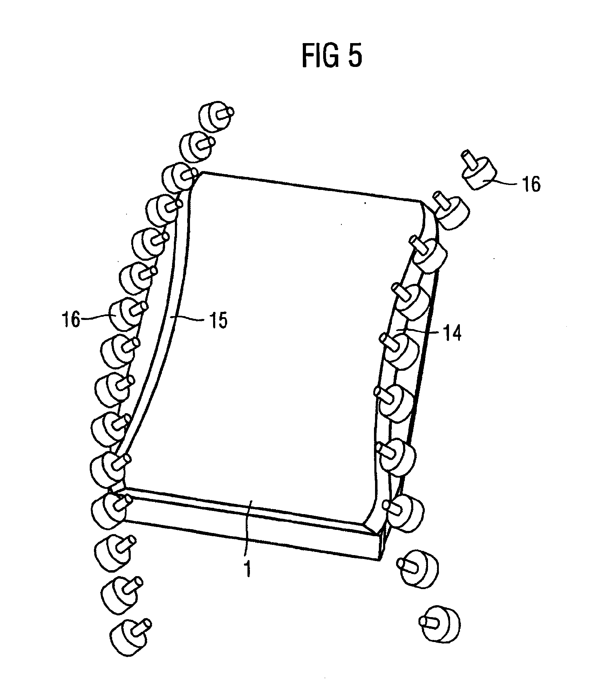

Fig. 5 zeigt noch die kinematische Umkehr von Fig. 4. Die geneigten Seitenflächen 14, 15 zur Führung und zum Antrieb des Behälters 1 sind an den Außenseiten beidseitig des Behälters 1 symmetrisch zueinander angeordnet. Abhängig davon, welche der Kegelrollen 16 bei Kurvenfahrt den Antrieb übernehmen sind die gekrümmten Seitenflächen 14, 15 konvex oder konkav geformt, so dass sich die Kegelrollen 16 jeweils in der Innen- oder Außenseite der Kurve an den Behälter 1 anlegen.

### Bezugszeichenliste

- 1: Behälter
- 2: Kurvenstück
- 3: Förderer
- 4: Führungs- und/oder Antriebsmittel
- 5: Führungs- und/oder Antriebsmittel
- 6: Tragplatte
- 7: Kugelrolle
- 8: Rolle
- 9: Rolle
- 10: Hilfsrolle
- 11: Antriebsband
- 12: Hebelarm
- 13: Vertiefung
- 14: Seitenfläche
- 15: Seitenfläche
- 15a: Auflagefläche
- 16: Kegelrolle
- 17: Rollenbahn
- 18: Rollenbahn
- 19: Seitenflächenabschnitt
- 20: Seitenflächenabschnitt

## Patentansprüche

1. Fördersystem, insbesondere eine Flughafen-Gepäckförderanlage, für Behälter (1) zum Transportieren von Gütern, insbesondere von Gepäckstücken,
mit Führungs- und/oder Antriebsmittel (4, 5) zum Führen und Bewegen der Behälter (1) mit einer jeweils vorgegebenen ersten Fördergeschwindigkeit und
mit einer Entladeeinrichtung zum Entladen der Behälter (1), wobei
die Entladeeinrichtung eine Kurve umfasst, in der sich die Behälter (1) entlang einer gekrümmten Förderbahn bewegen, und **dadurch gekennzeichnet,**
**dass** die in der Kurve zu entladenden Behälter (1) den Entladebereich mit einer zweiten Fördergeschwindigkeit durchlaufen, wobei die zweite Fördergeschwindig keit höher als die erste ist, und die derart gewählt ist, dass die Güter aufgrund der Fliehkraft so stark nach außen beschleunigt werden, dass sie im Entladebereich selbsttätig von den Behältern (1) rutschen.

2. Fördersystem nach Anspruch 1,
**dadurch gekennzeichnet,**
**dass** die Behälter (1) mit ihrer Bodenunterseite auf Abstützelementen aufliegen.

3. Fördersystem nach Anspruch 1 oder 2,
**dadurch gekennzeichnet,**
**dass** die Behälter (1) zwei auf der Behälterunterseite ausgebildete und in Transportrichtung verlaufende Führungs- und/oder Antriebsflächen aufweisen, die spiegelsymmetrisch in einem dem Radius der Kurve entsprechenden Radius derart nach außen oder nach innen gekrümmt sind, dass der größte bzw. kleinste Abstand der Führungs- und/oder Antriebsflächen im Bereich der Längsseitenmitte liegt, und
**dass** die Führungs- und/oder Antriebsmittel (4, 5) zumindest abschnittsweise jeweils an beiden Führungs- und/oder Antriebsflächen kraftschlüssig anliegen und einen Vortrieb des Behälters (1) bewirken.

4. Fördersystem nach Anspruch 3,
**dadurch gekennzeichnet,**
**dass** die Führungs- und/oder Antriebsflächen durch sich beidseitig der Behälterlängsmittelachse spiegelsymmetrisch erstreckende, einander zugewandte Seitenflächen (14, 15) einer in den Behälterboden eingeformten nutförmigen Vertiefung (13) gebildet werden.

5. Fördersystem nach Anspruch 4,
**dadurch gekennzeichnet,**
**dass** die Seitenflächen (14, 15) der nutförmigen Vertiefung (13) spiegelsymmetrisch in einem dem Kurvenradius der Kurve entsprechendem Radius derartig nach außen gekrümmt sind, dass deren größter Abstand in der Behältermitte liegt.

6. Fördersystem nach Anspruch 4 oder 5,
**dadurch gekennzeichnet,**
**dass** die Seitenflächen (14, 15) der nutförmigen Vertiefung (13) spiegelsymmetrisch in einem dem Kurvenradius entsprechendem Radius derartig nach innen gekrümmt sind, dass deren kleinster Abstand in der Behältermitte liegt.

7. Fördersystem nach einem der Ansprüche 4 - 6,
**dadurch gekennzeichnet,**
**dass** der Abstand der Seitenflächen (14, 15) in den in Transportrichtung vorderen und hinteren Bereichen der nutförmigen Vertiefung (13) der Breite der eingreifenden Führungs- und/oder Antriebsmittel (4, 5) angepasst ist, wobei die nutförmige Vertiefung (13) beidseitig nach außen stufenlos trichterförmig erweitert ist.

8. Fördersystem nach einem der Ansprüche 4 - 7,
**dadurch gekennzeichnet,**
**dass** die Seitenflächen (14, 15) der nutförmigen Vertiefung (13) spiegelsymmetrisch derart gegeneinander geneigt sind, dass sich die nutförmigen Vertiefung (13) nach unten aufweitet.

9. Fördersystem nach einem der Ansprüche 1 - 8,
**dadurch gekennzeichnet,**
**dass** die Auflagefläche (15a) des Behälters (1) zur Aufnahme des Stückgutes symmetrisch zur Behälterlängsachse muldenförmig nach unten gekrümmt ist.

10. Fördersystem nach Anspruch 9,
**dadurch gekennzeichnet,**
**dass** die Auflagefläche (15a) quer zur Behälterlängsachse einen parabolischen Verlauf aufweist.

11. Fördersystem nach einem der Ansprüche 1 - 10,
**dadurch gekennzeichnet,**
**dass** die Führungs- und/oder Antriebsmittel (4, 5) der Kurve aus in zwei Reihen angeordneten Rollen (8, 9) bestehen, deren Mantellinien jeweils einer Rollenreihe auf einer Kreisbahn liegen, die parallel zu mindestens einer der Seitenflächen (14, 15) verläuft, wobei mindestens eine der Reihen von Rollen (8, 9) von einem Antriebsband (11) umschlungen ist, welches an einer der Seitenflächen (14, 15) anlegbar ist, während die andere Reihe der Rollen (8, 9) mindestens bereichsweise im Kontakt mit der gegenüberliegenden Seitenflächen (14, 15) steht.

12. Fördersystem nach einem der Ansprüche 4 - 8
**dadurch gekennzeichnet,**
**dass** die Führungs- und/oder Antriebsmittel (4, 5) fliegend gelagerte und in die Nut eingreifende Kegel- oder Zylinderrollen (16) sind, die in Förderrichtung hintereinander in mindestens einer Reihe angeordnet sind, wobei jede Rolle (8, 9) an mindestens einer der Seitenflächen (14, 15) der nutförmigen Vertiefung (13) anlegbar ist.

13. Fördersystem nach Anspruch 12,
**dadurch gekennzeichnet,**
**dass** in der Kurve die in die nutförmige Vertiefung (13) eingreifenden Kegel- oder Zylinderrollen (16) auf einem Kreisbahnabschnitt angeordnet sind, dessen Radienmittelpunkt auf einer gemeinsamen Achse liegt.

## Claims

1. Conveyor system for containers (1) for transporting goods, in particular pieces of baggage, particularly for a baggage conveyor installation for airports,
having guide and/or drive means (4, 5) for guiding and moving the containers (1) at a respectively predefined first conveying speed, and
having an unloading device for unloading the containers (1), the unloading device comprising a curve, in which the containers (1) are moved along the curved conveying path, and
**characterized in that** the containers (1) to be unloaded in the curve pass through the unloading region at a second conveying speed, the second conveying speed being higher than the first, and which is chosen such that the goods are accelerated outwards so intensely on account of centrifugal force that they automatically slide from the containers (1) in the unloading region.

2. Conveyor system according to Claim 1, **characterized in that** the containers (1) rest with their bottom underside on supporting elements.

3. Conveyor system according to Claim 1 or 2, **characterized in that** the containers (1) have two guide and/or drive surfaces formed on the container underside and running in the transport direction, which are curved outwards or inwards with mirror symmetry in a radius corresponding to the radius of the curve such that the greatest and smallest distance of the guide and/or drive surfaces is located in the region of the centre of the longitudinal side, and
**in that** the guide and/or drive means (4, 5), at least in some sections, in each case rest with a force fit on both guide and/or drive surfaces and effect forward drive of the container (1).

4. Conveyor system according to Claim 3, **characterized in that** the guide and/or drive surfaces are formed by side surfaces (14, 15) which face each other, extend with mirror symmetry on both sides of the container longitudinal central axis and belong to a groove-like depression (13) moulded into the container bottom.

5. Conveyor system according to Claim 4, **characterized in that** the side surfaces (14, 15) of the groove-like depression (13) curve outwards with mirror symmetry in a radius corresponding to the curve radius of the curve in such a way that their greatest distance lies in the centre of the container.

6. Conveyor system according to Claim 4 or 5, **characterized in that** the side surfaces (14, 15) of the groove-like depression are curved inwards with mirror symmetry in a radius corresponding to the curve radius in such a way that their smallest distance lies in the centre of the container.

7. Conveyor system according to one of Claims 4 - 6, **characterized in that** the distance between the side surfaces (14, 15) in the leading and trailing regions of the groove-like depression (13) in the transport direction is matched to the width of the engaging guide and/or drive means (4, 5), the groove-like depression (13) being widened continuously outwards on both sides in the form of a funnel.

8. Conveyor system according to one of Claims 4 - 7, **characterized in that** the side surfaces (14, 15) of the grove-like depression (13) are inclined with respect to each other with mirror symmetry such that the groove-like depression (13) widens downwards.

9. Conveyor system according to one of Claims 1 - 8, **characterized in that** contact surface (15a) of the container (1) for holding the piece goods is curved downwards in the shape of a trough symmetrically with respect to the container longitudinal axis.

10. Conveyor system according to Claim 9, **characterized in that** the contact surface (15a) has a parabolic course transversely with respect to the container longitudinal axis.

11. Conveyor system according to one of Claims 1 - 10, **characterized in that** the guide and/or drive means (4, 5) of the curve comprise rollers (8, 9) arranged in two rows, whose envelope lines of a row of rollers in each case respectively lie on a circular path which runs parallel to at least one of the side surfaces (14, 15), at least one of the rows of rollers (8, 9) having a drive belt (11) wrapped around it, which can bear on one of the side surfaces (14, 15), while the other row of rollers (8, 9) is in contact with the opposite side surfaces (14, 15), at least in some regions.

12. Conveyor system according to one of Claims 4 - 8, **characterized in that** the guide and/or drive means (4, 5) are tapered or cylindrical rollers (16) which are cantilever-mounted and engage in the groove and, in the conveying direction, are arranged one after another in at least one row, it being possible for each roller (8, 9) to bear on at least one of the side surfaces (14, 15) of the groove-like depression (13).

13. Conveyor system according to Claim 12, **characterized in that**, in the curve, the tapered or cylindrical rollers (16) engaging in the groove-like depression (13) are arranged on a section of a circular path whose radial centre lies on a common axis.

## Revendications

1. Système de convoyage, notamment installation de transport de bagages dans un aéroport, de conteneurs (1) pour transporter des produits, notamment des bagages,
comprenant des moyens (4, 5) de guidage et/ou d'entraînement pour guider et déplacer les conteneurs (1) à une première vitesse de convoyage prescrite, et
comprenant un dispositif de déchargement pour décharger les conteneurs (1), le dispositif de déchargement comprenant une courbe dans laquelle les conteneurs (1) se déplacent le long d'une voie de transport incurvée, et **caractérisé**
**en ce que** les conteneurs (1) à décharger dans la courbe passent la zone de déchargement à une deuxième vitesse de transport, la deuxième vitesse de transport étant plus grande que la première, et qui est choisie de manière à ce que les produits soient, en raison de la force centrifuge, accélérés si fortement vers l'extérieur qu'ils glissent automatiquement des conteneurs (1) dans la zone de déchargement.

2. Système de convoyage suivant la revendication 1, **caractérisé en ce que** les conteneurs (1) reposent par leur face intérieure de fond sur des éléments d'appui.

3. Système de convoyage suivant la revendication 1 ou 2, **caractérisé en ce que** les conteneurs (1) ont deux surfaces de guidage et/ou d'entraînement, constituées sur la face intérieure des conteneurs et s'étendant dans la direction de transport, qui sont incurvées vers l'extérieur ou vers l'intérieur d'une manière symétrique comme en un miroir suivant un rayon correspondant au rayon de la courbe, de sorte que la distance la plus grande ou la plus petite entre les surfaces de guidage et/ou d'entraînement se trouve dans la zone du milieu des grands côtés, et
**en ce que** les moyens (4, 5) de guidage et/ou d'entraînement s'appliquent à coopération de force au moins par tronçon, respectivement, aux deux surfaces de guidage et/ou d'entraînement et provoquent une avance du conteneur (1).

4. Système de convoyage suivant la revendication 3, **caractérisé en ce que** les surfaces de guidage et/ou d'entraînement sont formées par des surfaces (14, 15) latérales tournées l'une vers l'autre et s'étendant symétriquement comme en un miroir des deux côtés de l'axe médian longitudinal du conteneur d'une cavité (13) en forme de rainure ménagée dans le fond du conteneur.

5. Système de convoyage suivant la revendication 4, **caractérisé en ce que** les surfaces (14, 15) latérales de la cavité (13) en forme de rainure sont incurvées vers l'extérieur d'une manière symétrique comme en un miroir suivant un rayon correspondant au rayon de la courbe, de façon à ce que leur distance la plus grande se trouve au milieu du conteneur.

6. Système de convoyage suivant la revendication 4 ou 5, **caractérisé en ce que** les surfaces (14, 15) latérales de la cavité (13) en forme de rainure sont incurvées vers l'intérieur d'une manière symétrique comme en un miroir suivant un rayon correspondant au rayon de la courbe, de façon à ce que leur distance la plus petite se trouve au milieu du conteneur.

7. Système de convoyage suivant l'une des revendications 4 à 6, **caractérisé en ce que** la distance entre les surfaces (14, 15) latérales dans les zones avant et arrière dans le sens de transport de la cavité (13) en forme de rainure est adaptée à la largeur des moyens (4, 5) de guidage et/ou d'entraînement qui y pénètrent, la cavité (13) en forme de rainure étant élargie des deux côtés vers l'extérieur d'une manière continue en forme de trémie.

8. Système de convoyage suivant l'une des revendications 4 à 7, **caractérisé en ce que** les surfaces (14, 15) latérales de la cavité (13) en forme de rainure sont inclinées l'une vers l'autre d'une manière symétrique comme en un miroir, de façon à ce que la cavité (13) en forme de rainure s'élargisse vers le bas.

9. Système de convoyage suivant l'une des revendications 1 à 8, **caractérisé en ce que** la surface (15a) d'appui du conteneur (1) est, pour la réception du produit, tournée vers le bas en forme de cuvette symétriquement par rapport à l'axe longitudinal du conteneur.

10. Système de convoyage suivant la revendication 9, **caractérisé en ce que** la surface (15a) d'appui a, transversalement à l'axe longitudinal du conteneur, un tracé parabolique.

11. Système de convoyage suivant l'une des revendications 1 à 10, **caractérisé en ce que** les moyens (4, 5) de guidage et/ou d'entraînement de la courbe sont constitués de galets (8, 9) disposés suivant deux rangées dont les génératrices de, respectivement, une rangée de galets se trouvent sur une voie circulaire qui s'étend parallèlement à au moins l'une des surfaces (14, 15) latérales et sur au moins l'une des rangées de galets (8, 9) passe une bande (11) d'entraînement qui peut s'appliquer à l'une des surfaces (14, 15) latérales, tandis que l'autre rangée des galets (8, 9) est au moins par partie en contact avec les surfaces (14, 15) latérales opposées.

12. Système de convoyage suivant l'une des revendications 4 à 8, **caractérisé en ce que** les moyens (4, 5) de guidage et/ou d'entraînement sont montés fous et sont des galets (16) coniques ou cylindriques pénétrant dans la rainure, qui sont disposés les uns derrière les autres dans le sens de transport en suivant au moins une rangée, chaque galet (8, 9) pouvant s'appliquer à au moins l'une des surfaces (14, 15) latérales de la cavité (13) en forme de rainure.

13. Système de convoyage suivant la revendication 12, **caractérisé en ce que**, dans la courbe, les galets (16) coniques ou cylindriques pénétrant dans la cavité (13) en forme de rainure sont disposés sur un tronçon de voie circulaire dont le centre du rayon se trouve sur un axe commun.
